# EUROPEAN PATENT SPECIFICATION

(11) **EP 1 578 297 B1**
(45) Date of publication and mention of the grant of the patent: **05.10.2011**
(21) Application number: 03774423.2
(22) Date of filing: 20.11.2003
(51) Int. Cl.: A61C 8/00

(54) **TOOTH IMPLANT ARRANGEMENT**
ZAHNIMPLANTAT-ANORDNUNG
IMPLANT DENTAIRE

(30) Priority: 28.11.2002 SE 0203507
(43) Date of publication of application: 28.09.2005
(73) Proprietor: Nobel Biocare Services AG, 8058 Zürich-Flughafen (CH)
(72) Inventor: ANDERSSON, Matts, 443 39 Lerum (SE); BRAJNOVIC, Izidor, 416 77 Göteborg (SE); JOHANSSON, Ulf, 442 33 Kungälv (SE)
(74) Representative: Davies, Dominic Jack
(86) International application number: PCT/SE2003/001798
(87) International publication number: WO 2004/047666

(56) References cited:
- WO-A-03/045268
- WO-A1-00/27300
- WO-A1-01/34056
- WO-A2-01/50972
- FR-A1- 2 721 196
- US-A1- 2002 039 718

## Description

The present invention relates to a tooth implant arrangement for replacing a front tooth which has been lost or extracted, in which the implant comprises an anchoring part, for example an anchoring part which is provided with an outer thread and which is applied in a recess formed in the jaw bone at the site of the lost or extracted tooth. The arrangement also comprises a spacer sleeve part intended to extend through the gum of the jaw bone, and a prepared or preparable part which adjoins the spacer sleeve part and is intended to support a tooth replacement, for example a dental crown.

In cases where a front tooth has been lost or extracted, it is already known to replace the tooth with the aid of a bridge construction, which means that the adjacent tooth or teeth must be ground down to constitute an attachment for the bridge in question. Thus, for example, it has been possible to create a three-part bridge, which in this connection has been considered to provide a mechanically strong solution. In this connection, reference may be made in purely general terms to the use to which such three-part bridges are put in practice.

Loss of a front tooth can affect people of all ages, for example in connection with sports activities, as a result of road accidents, etc. Loss of a front tooth can feel very traumatic and may even restrict the person's social life since a tooth replacement of said conventional type generally takes a considerable time. In some circumstances it may even be desirable to voluntarily correct a defective or malpositioned tooth (tooth root) using a tooth replacement.

There is a great need for effective alternatives to the known technique in connection with the loss or extraction of a front tooth. It is an object of the invention to solve this problem and propose a tooth implant configured as a single piece for replacing a lost or extracted front tooth. There is a particular need for the treatment to be able to be carried out relatively quickly and for the solution with the one-piece implant to constitute a totally satisfactory alternative from the point of view of stability. The invention solves this problem too.

Tooth status and tooth appearance may vary considerably and there is therefore a need to be able to offer an attractive replacement alternative which can be used in the majority of cases which occur. The invention solves this problem too.

US2002039718 (Kwan) discloses a dental implant system and additional methods of attachment. The dental implant system includes an implant-abutment device, healing ball, analog abutment, retaining screw and guide pin.

The feature which is regarded as characterizing an arrangement according to the invention is that, by integration of the anchoring part, the spacer sleeve part and the prepared or preparable part, the tooth implant constitutes a one-piece tooth implant in which the configuration and direction of the preparation part is substantially adapted to the anatomy of the inner arc-shaped surface of the lost or extracted tooth , and to the direction of said tooth.

Further embodiments will become clear from the attached dependent claims and from the description.

The novel arrangement can be used to individually replace the front teeth, for example the six frontmost teeth of the upper jaw and lower jaw. The one-piece implant is considered as implant, spacer and prepared part on which a dental crown, for example of porcelain, is cemented. The prepared part can be prefabricated or can be tailored to the specific customer if necessary. The porcelain crown can be prefabricated, i.e. adapted to the prefabricated prepared part. Said prepared part can be prefabricated at different angle directions and in different preparation shapes to correspond to the anatomy of the different teeth. The prepared part includes, in the axial direction, a tool socket so that the one-piece tooth implant can be mounted in place in the jaw bone. The length of the spacer part forming a passage through the skin can be varied depending on the requirements, for example depending on the thickness of the gum. To prevent the gray color of the metal showing through, the surface of the spacer part can be treated to give it a color more akin to the tooth root in order to acquire the natural appearance of the tooth root. This can alternatively be done by sputtering with a biocompatible material in the chosen tooth color, or by covering the spacer part with a ceramic sleeve of the desired thickness and shape. The one-piece implant can be fitted in place with the aid of a template in which a sleeve is used. The bone/jaw bone is drilled via the sleeve in a preplanned direction and to a predetermined depth. The drilling depth and drilling direction can be determined by X-ray or computed tomography.

A presently proposed embodiment of an arrangement having the defining characteristics of the invention will be described below with reference to the attached figures, where
- Figure 1: shows, in a vertical view, a one-piece implant applied in a lower jaw, with the lower jaw extending substantially at right angles to the plane of the figure,
- Figure 2: shows a perspective view, from underneath and from in front, of a one-piece implant applied in the upper jaw as a replacement for a front tooth, with a template being used for drilling a hole in the jaw bone and for positioning the one-piece implant,
- Figure 3: shows a side view of an introductory stage of the application of the replacement according to Figure 2 in which a hole has first been drilled with the aid of the template, and the one-piece implant has then been applied in the direction of the hole via a sleeve placed in the template, and
- Figure 4: shows a side view of the implant screwed into the hole and with a preparation part arranged in the implant in connection with the lost or extracted front tooth in question.

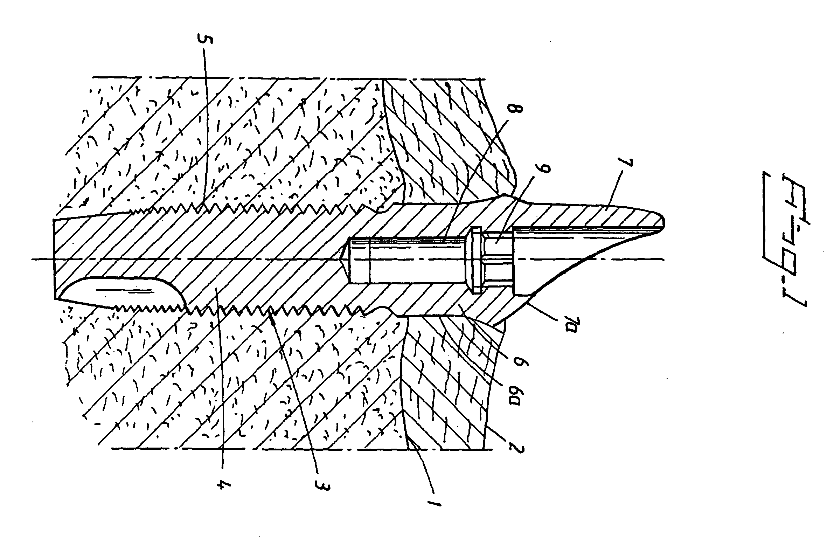

In Figure 1, a jaw bone is designated by 1, and the gum of the jaw bone is designated by 2. The illustrated part of the jaw bone, which may be a lower jaw, extends substantially at right angles to the plane of the paper in Figure 1. A one-piece implant of the type in question is shown screwed securely into a drilled hole which has been formed in the jaw bone with a drill template and which may be threaded or unthreaded. The one-piece implant is designated overall by 3 and comprises inter alia an anchoring part 4 which is provided with an outer thread 5, via which the anchoring part can be screwed into the drilled hole. The anchoring part 4 merges into a spacer sleeve part or spacer sleeve portion 6 which is intended to extend through the gum 2. The spacer sleeve part here has a height corresponding substantially to or slightly exceeding the thickness of the gum 2. Arranged on the spacer sleeve part 6 there is a prepared or preparable part 7 with an outer surface 7a directed toward the reverse face of the replacement dental crown, and said surface 7a is in this case arranged so that it adjoins said reverse face of the dental crown which extends in a concave shape. A dental crown (coated porcelain) with a concave inner surface is applied to the prepared part 7. Extending through the thus integrated parts 4, 6 and 7 there is a recess 8 provided with a tool socket 9 which can be acted on by a screwdriver of the star type, for example a tool socket and screwdriver of the type shown in WO 00/27300.

Said parts of the spacer sleeve and/or preparation part 7 can be provided with a coating consisting of porcelain or other material which can be given a color corresponding to the color of the tooth root instead of showing the metal color of the part in question, which means that the transition or preparation line for the dental crown is not emphasized by having a color different than the color of the tooth root. An example of such a coating is shown in SE 8702445-1.

In an alternative embodiment, the part 6 in question can have its outside 6a sputtered with a biocompatible material in a manner known per se.

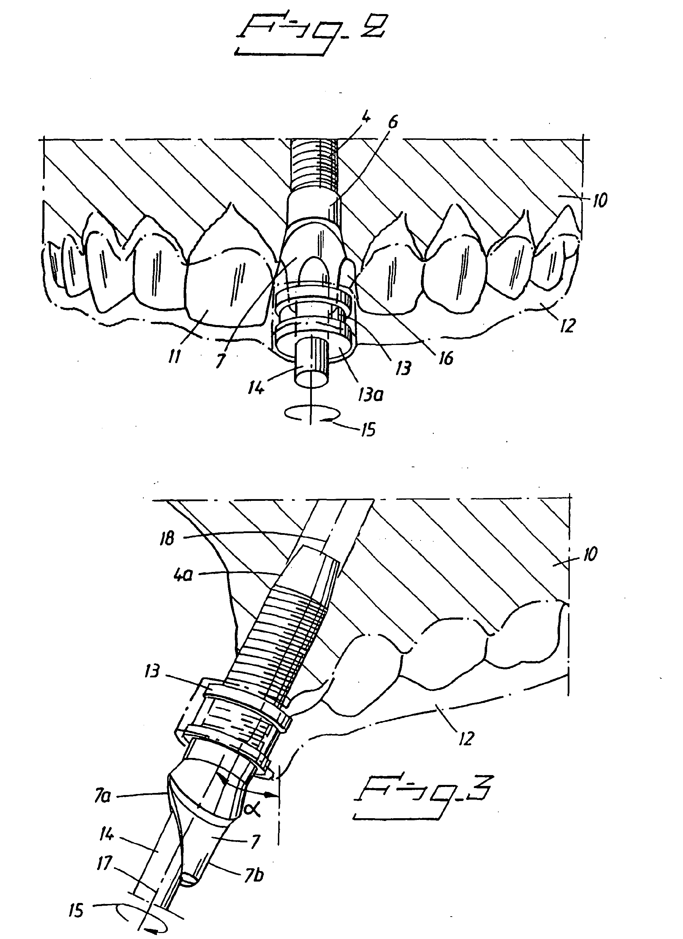

In Figure 2, an upper jaw is designated by 10, and a front-tooth by 11. The front tooth alongside the front tooth 11 has been lost and is to be replaced with a one-piece implant according to the invention. A hole is formed in the jaw bone using a drill (not shown in the figure) with which the hole in the jaw is made with the aid of a template 12. The template is provided with a guide sleeve 13 against whose inside surface 13a the drill can bear during formation of the hole. The template 12 can be designed in a manner known per se and has fastening members via which the template can be secured to the remaining teeth in the jaw bone in question. The template can have various shapes depending on the shapes of the remaining teeth, the shape of the jaw bone, etc. The sleeve 13 is also used for guiding the one-piece implant which is introduced with its tip (not shown in Figure 2) from the outside via the inside of the sleeve. The implant is screwed into place with the aid of a screwing instrument 14 which is applied to the tool socket 9 according to Figure 1. The implant is screwed in in the clockwise direction 15 and is tightened so that the prepared part 7 can fit anatomically to the tooth in question which is to be replaced. The space for the dental crown is indicated by 16.

In Figure 3, the one-piece implant is shown in a first position where it has been introduced into the sleeve 13 and the conical front part 4a of the anchoring part is introduced into the drilled hole. The design of the template 12 is shown here in a view different than Figure 2. The direction of introduction is along the longitudinal axis 17 and coincides with the longitudinal axis 18 of the drilled hole. The direction 18 is chosen so that the anchoring takes place in a solid and well-preserved part of the jaw bone 10. To achieve optimal mechanical strength for the one-piece implant in the jaw bone, an angle α may vary. Said angle constitutes an angle between a vertical axis for the jaw bone and said directions of application for the hole 18 and the longitudinal axis 17. The optimum position of the drilled hole in question can be established in a manner known per se by X-ray examination. The rotation positions for the surfaces 7a and 7b on the prepared or preparable part are substantially associated with the case which is to form the replacement of the lost front tooth. The rotation position of the part 7 must be optimal so that the part 7 is accommodated fully in the dental crown or similar applied to the part. The dental crown is applied to the prepared part with the aid of cement or other binding substance or by securing members.

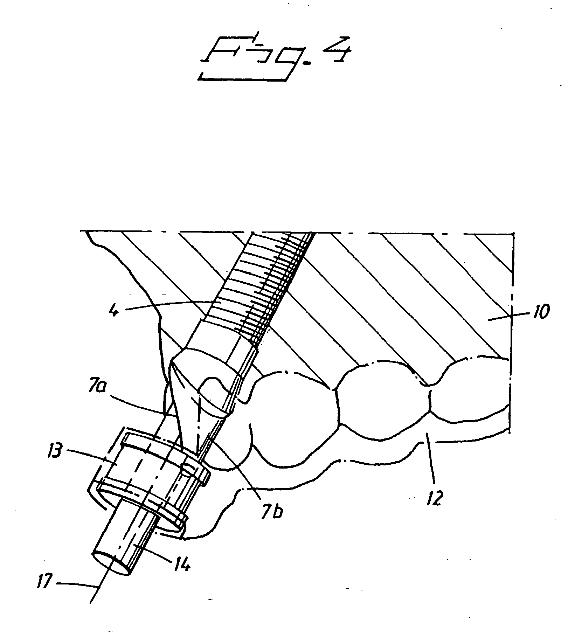

In Figure 4, the one-piece implant has been given its final position in the jaw bone 10, and the action of the screwing function in the direction of rotation 15 (cf. Figure 3) can stop. The anchoring part 14 has penetrated into the hole (cf. Figure 3), and the prepared part 7 has been assigned a rotation position about the longitudinal axis 17 in which the surfaces 7a and 7b assume optimal positions from the point of view of closure. In this position, the template 12 can be withdrawn outward (downward) as can the screwing instrument.

The invention is not limited to the embodiment described above by way of example and instead can be modified within the scope of the attached patent claims

## Claims

1. A tooth implant arrangement for replacing a front tooth, which has been lost or extracted, in which the implant comprises
- an anchoring part, for example an anchoring part (4) which is provided with an outer thread and which is applicable in a recess formed in the jaw bone (1) at the site of the lost or extracted tooth,
- a spacer sleeve part (6) into which the anchoring part merges and which is intended to extend through the gum (2) of the jaw bone, and
- a prepared or preparable part (7) which adjoins the spacer sleeve part and is intended to support a tooth replacement, for example a dental crown,
wherein the dental implant is a one-piece implant (3) by integration of the anchoring part, the spacer sleeve part and the prepared or preparable part,
wherein the prepared or preparable part includes an outer surface (7a) adapted to the anatomy of the inner arc-shaped surface of the lost or extracted tooth and extending through the longitudinal axis of the implant, the prepared or preparable part further including a central recess (8) extending from said outer surface (7a) into the implant and having a axis that generally coincides with the longitudinal axis of the implant, and wherein the central recess (8) is provided with a tool socket (9) by means of which the one-piece implant (3) can be screwed into the recess formed in the jaw bone (1).

2. The arrangement as claimed in patent claim 1, wherein the tool socket (9) is designed with a star-shaped grip function for the tool in question, for example a star-shaped screwdriver, by means of which the one-piece implant (3) can be screwed into the hole formed in the jaw bone (1).

3. The arrangement as claimed in any of patent claims 1-2, wherein the tooth replacement, for example the dental crown, is prefabricated for application on or to the prepared or preparable part (7) of the implant arrangement.

4. The arrangement as claimed in any of patent claims 1-3, wherein the spacer sleeve part (6) is subjected to sputtering with a biocompatible material of the chosen tooth color, or in that the spacer sleeve part (6) is covered with an outer envelope of ceramic material in the chosen tooth color.

## Patentansprüche

1. Zahnimplantatanordnung zum Ersetzen eines Vorderzahnes, der verloren oder extrahiert wurde, wobei das Implantat aufweist
- einen Ankerteil, beispielsweise einen Ankerteil (4), der mit einem Außengewinde versehen ist und der in eine Ausnehmung, die in dem Kieferknochen (1) am Ort des verlorenen oder extrahierten Zahns ausgebildet ist, anwendbar ist,
- ein Abstandshülsenteil (6), In das der Ankerteil eingebracht wird und für das beabsichtigt ist, dass es sich durch das Zahnfleisch (2) des Kieferknochens erstreckt, und
- ein vorbereitetes oder vorbereitbares Teil (7), das sich an den Abstandshülsenteil anschließt und für das beabsichtigt ist, dass es einen Zahnersatz, beispielsweise eine Dentalkrone, trägt,
wobei das Dentalimplantat durch Integration des Ankerteils, des Abstandshülsenteils und des vorbereiteten oder vorbereitbaren Teils ein einstückiges Implantat (3) ist,
wobei das vorbereitete oder vorbereitbare Teil eine Außenfläche (7a) aufweist, die an die Anatomie der innenbogenförmigen Fläche des verlorenen oder extrahierten Zahnes angepasst ist und sich durch die Längsachse des Implantats erstreckt, wobei das vorbereitete oder vorbereitbare Teil ferner eine Mittenausnehmung (8) aufweist, die sich von der Außenfläche (7a) in das Implantat erstreckt und eine Achse aufweist, die im Wesentlichen mit der Längsachse des Implantats übereinstimmt, und wobei die Mittenausnehmung (8) mit einem Werkzeugsockel (9) versehen ist, mit dem das einstückige Implantat (3) in die Ausnehmung, die in dem Kieferknochen (1) ausgebildet ist, eingeschraubt werden kann.

2. Anordnung nach Patentanspruch 1, wobei der Werkzeugsockel (9) mit einer sternförmigen Grifffunktion für das besagte Werkzeug, beispielsweise einen sternförmigen Schraubendreher, versehen ist, mit dem das einstückige Implantat (3) in das Loch, das in dem Kieferknochen (1) gebildet ist, eingeschraubt werden kann.

3. Anordnung nach einem der Patentansprüche 1-2, wobei der Zahnersatz, beispielsweise die Dentalkrone, für die Anwendung an oder zu dem vorbereiteten oder vorbereitbaren Teil (7) der Implantatanordnung vorgefertigt ist.

4. Anordnung nach einem der Patentansprüche 1-3, wobei das Abstandshülsenteil (6) einem Sputtern mit gewebekompatiblem Material der gewählten Zahnfarbe ausgesetzt wird oder dass das Abstandshülsenteil (6) mit einer äußeren Umhüllung aus keramischen Material mit der gewählten Zahnfarbe bedeckt ist.

## Revendications

1. Agencement d'implant dentaire pour remplacer une dent de devant, perdue ou extraite, où l'implant comprend
une partie d'ancrage, par exemple une partie (4) d'ancrage qui est dotée d'un filet extérieur et qui peut être appliquée dans un évidement formé dans la mâchoire (1) au niveau du site de la dent perdue ou extraite,
une partie (6) à manchon d'écartement dans laquelle la partie d'ancrage se fond et qui est destinée à s'étendre à travers la gencive (2) de la mâchoire, et
une partie (7) préparée ou pouvant être préparée qui est contigüe à la partie de manchon d'écartement et est destinée à supporter une prothèse dentaire, par exemple une couronne dentaire,
où l'implant dentaire est un implant monobloc (3) par intégration de la partie d'ancrage, de la partie à manchon d'écartement et de la partie préparée ou pouvant être préparée,
où la partie préparée ou pouvant être préparée comporte une surface extérieure (7a) adaptée à l'anatomie de la surface intérieure en forme d'arc de la dent perdue ou extraite et s'étendant à travers l'axe longitudinal de l'implant, la partie préparée ou pouvant être préparée comportant en outre un évidement central (8) s'étendant depuis ladite surface extérieure (7a) dans l'implant et présentant un axe qui coïncide globalement avec l'axe longitudinal de l'implant, et
où l'évidement central (8) est muni d'une douille (9) d'outil au moyen de laquelle l'implant monobloc (3) peut être vissé dans l'évidement formé dans la mâchoire (1).

2. Agencement tel que revendiqué dans la revendication 1 de brevet, dans lequel la douille (9) d'outil est conçue avec une fonction de serrage en forme d'étoile pour l'outil en question, par exemple un tournevis en forme d'étoile, au moyen duquel l'implant monobloc (3) peut être vissé dans le trou formé dans la mâchoire (1).

3. Agencement tel que revendiqué dans l'une des revendications 1-2 de brevet, dans lequel la prothèse dentaire, par exemple la couronne dentaire, est préfabriquée pour être appliquée sur ou à la partie préparée ou pouvant être préparée (7) de l'agencement d'implant.

4. Agencement tel que revendiqué dans l'une des revendications 1-3 de brevet, dans lequel la partie (6) à manchon d'écartement est soumise à une pulvérisation avec un matériau biocompatible ayant la couleur de la dent choisie, ou en ce que la partie (6) à manchon d'écartement est recouverte avec une enveloppe extérieure céramique à la couleur de la dent choisie.
